# EUROPÄISCHE PATENTSCHRIFT

(11) **EP 3 394 362 B1**
(45) Veröffentlichungstag und Bekanntmachung des Hinweises auf die Patenterteilung: **07.06.2023**
(21) Anmeldenummer: 16816263.4
(22) Anmeldetag: 16.12.2016
(51) Int. Cl.: E04F 15/02, E04F 15/10, B32B 7/06, B32B 7/12, B32B 25/00, B32B 25/02, B32B 25/06, B32B 25/12, B32B 27/08, B32B 27/10, B32B 27/30, B32B 27/32, B32B 37/12, B32B 38/10, B32B 25/08, B32B 25/16

(54) **SELBSTKLEBENDER BODENBELAG UND VERFAHREN ZU DESSEN HERSTELLUNG**
SELF-ADHESIVE FLOOR COVERING AND METHOD FOR THE PRODUCTION THEREOF
REVÊTEMENT DE SOL AUTOCOLLANT ET MÉTHODE DE RÉALISATION

(30) Priorität: 22.12.2015 DE 102015122532; 08.06.2016 DE 102016110589
(43) Veröffentlichungstag der Anmeldung: 31.10.2018
(73) Patentinhaber: Nora Systems GmbH, 69469 Weinheim (DE)
(72) Erfinder: KRÖGER, Mario, 76646 Bruchsal (DE); ADAMETZ, Paul, 68305 Mannheim (DE)
(74) Vertreter: Reiser & Partner Patentanwälte mbB
(86) Internationale Anmeldenummer: PCT/EP2016/081429
(87) Internationale Veröffentlichungsnummer: WO 2017/108612

(56) Entgegenhaltungen:
- EP-A1- 2 452 815
- WO-A1-2012/017235
- WO-A1-2015/089957
- DE-A1-102010 036 121
- DE-A1-102016 124 555
- US-A- 4 755 545
- US-A1- 2006 059 825
- US-A1- 2011 281 094

## Beschreibung

Die Erfindung betrifft einen selbstklebenden Bodenbelag umfassend eine Tragschicht, enthaltend eine Polymerzusammensetzung, die ein Elastomer und/oder ein thermoplastisches Elastomer umfasst, wobei der Bodenbelag an einer ersten Seite der Tragschicht eine Klebschicht umfassend einen Klebstoff zum Verbinden des Bodenbelags mit einem Untergrund aufweist. Bodenbeläge aus Elastomer werden bislang in der Regel mittels flüssiger Dispersionsklebstoffe, die erst bei der Verlegung aufgebracht werden, mit dem Untergrund verklebt. Gleichwohl sind bereits selbstklebende Bodenbeläge vorgeschlagen worden.

Beispielsweise beschreibt die EP 2 513 208 A1 Bodenbeläge aus unterschiedlichen Materialien, die mit einer Klebschicht versehen sind. Dabei wird für die Klebschicht ein Klebstoff auf Acrylat- oder Silikonbasis eingesetzt. Die EP 0 270 888 A2 beschreibt einen Bodenbelag, der mit einen Haftklebstoff auf der Basis von Kautschuk, EVA-Copolymer oder Polyacrylat versehen wird. Der beschriebene Bodenbelag soll dabei lösbar mit dem Untergrund verbunden werden.

Es hat sich gezeigt, dass Bodenbeläge aus Elastomer oder thermoplastischem Elastomer mit den bekannten Lösungen für selbstklebende Bodenbeläge nicht optimal verklebt werden können. Dies betrifft sowohl die Festigkeit der Verklebung als auch die Randbedingungen bei der Verklebung sowie die Handhabung. Die Dokumente WO 2012/017235 A1, DE 10 2016 12455 A1, US 2011 /281094 A1 und WO 2015/089957 A1 offenbaren auch solche Bodenbeläge.

Die Erfindung stellt sich daher die Aufgabe, einen selbstklebenden Bodenbelag anzugeben, der einfach und zuverlässig mit einem Untergrund verklebt werden kann. Die Erfindung stellt sich darüber hinaus die Aufgabe, ein Verfahren zur Herstellung eines solchen Bodenbelags anzugeben.

Die Aufgabe wird bei einem Bodenbelag mit den Merkmalen von Anspruch 1 gelöst. Demnach ist bei einem eingangs genannten selbstklebenden Bodenbelag, der eine Polymerzusammensetzung mit einem Elastomer und/oder einem thermoplastischen Elastomer umfasst, vorgesehen, dass der Klebstoff ein styrolbasiertes thermoplastisches Elastomer umfasst. Es hat sich gezeigt, dass mit der beanspruchten Merkmalskombination besonders gute Klebeeigenschaften erreicht werden können. Dies betrifft unter anderem den Schälwiderstand, welcher ein Maß für die Festigkeit der Klebeverbindung mit einem Untergrund ist. Dabei hat sich gezeigt, dass mit der beanspruchten Merkmalskombination auch bei Randbedingungen, bei denen bislang keine zuverlässige Klebung des Bodenbelags an dem Untergrund erreicht werden konnte, eine gute Klebeverbindung erzielt werden kann. Insbesondere kann mit den beanspruchten Merkmalen ein Bodenbelag aus Elastomer bzw. thermoplastischem Elastomer auch auf Untergründen sicher verlegt werden, die nicht vollständig trocken sind. An den Feuchtigkeitsgehalt des Untergrunds müssen daher weniger strenge Anforderungen gestellt werden als bislang. Dies trägt insbesondere bei einer Verwendung in Gebäuden zu einem zügigen Baufortschritt bei, da geringere Trocknungszeiten für Untergründe wie z.B. Estrich eingehalten werden müssen. Bereits dies erklärt, dass die Handhabung des zu verklebenden Bodenbelags bei der Verklebung besonders einfach und sicher ist. Insbesondere wird das Risiko von Fehlern durch unzureichende Trocknung des Untergrunds reduziert. Aber auch sonst ist die Handhabung besonders einfach, da der selbstklebende Bodenbelag einfach zugeschnitten und mit einem Untergrund verklebt werden kann. Insbesondere kann das aufwendige Aufbringen eines Klebstoffes während der Verlegung entfallen, da der selbstklebende Bodenbelag bereits vorab mit der erforderlichen Menge an Klebstoff beschichtet ist. Hierdurch werden mögliche Fehler währende der Verlegung sicher vermieden. Zudem kann durch eine industrielle Aufbringung der Klebschicht auf den Bodenbelag der Materialbedarf reduziert werden. Damit ist der Bodenbelag auch besonders ressourcenschonend. Darüber hinaus kann der Bodenbelag kostengünstig hergestellt werden. Der erfindungsgemäße Bodenbelag eignet sich dabei für unterschiedliche Anwendungen. Neben der Anwendung in Gebäuden kann der Bodenbelag insbesondere auch in Fahrzeugen aller Art, insbesondere Schienenfahrzeugen, wie Bahnen und Straßenbahnen oder dgl. sowie Bussen verwendet werden. Dadurch, dass die Tragschicht ein Elastomer aus vernetztem Kautschuk bzw. ein thermoplastisches Elastomer enthält, ist der Bodenbelag außerordentlich langlebig und eignet sich auch für starke Beanspruchungen, wie sie z.B. in öffentlichen Gebäuden und öffentlichen Verkehrsmitteln auftreten.

Die erfindungsgemäße Aufgabe wird zudem bei einem Verfahren mit den Merkmalen von Anspruch 12 gelöst. Demnach ist vorgesehen, dass das Verfahren zur Herstellung eines selbstklebenden Bodenbelags, die Schritte umfasst:
- Bereitstellen einer Tragschicht, welche ein Elastomer und/oder ein thermoplastisches Elastomer umfasst;
- Bereitstellen eines Klebstoffes, der ein styrolbasiertes thermoplastisches Elastomer umfasst;
- Aufbringen des Klebstoffes auf eine erste Seite der Tragschicht zur Erstellung eines Bodenbelages mit einer Klebschicht zum Verbinden mit einem Untergrund.

Nachfolgend werden weitere vorteilhafte Merkmale der Erfindung beschrieben. Die beschriebenen Merkmale beziehen sich dabei jeweils sowohl auf den Bodenbelag als auch das Verfahren zu dessen Herstellung.

Eine vorteilhafte Ausgestaltung der Erfindung sieht vor, dass der Klebstoff ein Haftklebstoff ist. Besonders bevorzugt ist dabei, wenn der Klebstoff ein drucksensitiver Haftklebstoff (Pressure Sensitive Adhesive) ist. Auf diese Weise können insbesondere gute Klebeeigenschaften erreicht werden. Zudem kann die Herstellung des Bodenbelages sicher und kostengünstig durchgeführt werden. Ein Haftklebstoff verfügt innerhalb der Anwendungstemperatur (hier übliche Raumtemperaturen) über eine permanente Oberflächenklebrigkeit (sogenannter Tack). Diese Oberflächenklebrigkeit ermöglicht die einfache Verklebung des Bodenbelags mit dem Untergrund durch leichten Anpressdruck. Insbesondere hat der Klebstoff bei Raumtemperatur (20°C) die Eigenschaft eines Haftklebstoffes. Besonders bevorzugt hat der Klebstoff über die Temperaturspanne von 0°C bis 40°C die Eigenschaft eines Haftklebstoffes.

In vorteilhafter Weise ist der Klebstoff ein Schmelzklebstoff. Mit einem Schmelzklebstoff (Hotmelt) können besonders gute Klebeeigenschaften erreicht werden. Zudem kann die Herstellung einfach und sicher durchgeführt werden. In besonders bevorzugter Weise ist der Klebstoff ein Haft-Schmelzklebstoff auf der Basis von thermoplastischem Kautschuk.

Weiterhin trägt zu guten Klebeeigenschaften bei, wenn das styrolbasierte thermoplastische Elastomer des Klebstoffes ein Styrol-Blockcopolymer (TPE-S) umfasst.

Eine weitere Verbesserung sieht vor, dass das styrolbasierte thermoplastische Elastomer ein Triblock-Copolymer mit der Struktur S-X-S umfasst, wobei S ein Styrolblock ist und X ein Block mit bei 20°C elastomeren Eigenschaften. Vorzugsweise stellt der Styrolblock bei 20°C einen glasartigen oder kristallinen Block dar, der bei höheren Temperaturen aufschmilzt. Diese Maßnahmen tragen zu guten Klebeeigenschaften des selbstklebenden Bodenbelags bei. Vorzugsweise umfasst der Block X ein Isoprenmonomer und/oder ein Butadienmonomer.

Zu guten Klebeeigenschaften trägt weiterhin bei, wenn das styrolbasierte thermoplastische Elastomer ein Diblock-Copolymer umfasst. Bevorzugt ist dabei, wenn der Anteil des Diblock-Copolymers bezogen auf die Menge des styrolbasierten thermoplastischen Elastomers mehr als 5% und besonders bevorzugt mehr als 10% beträgt. Besonders gute Eigenschaften ergeben sich bei einem Diblock-Anteil von mehr als 15%. In vorteilhafter Weise ist der Diblock-Anteil bezogen auf die Menge des styrolbasierten thermoplastischen Elastomers kleiner als 75%. Vorzugsweise umfasst dabei das Diblock-Copolymer einen Styrolblock. Weiterhin ist bevorzugt, wenn das Diblock-Copolymer ein Isoprenmonomer und/oder ein Butadienmonomer umfasst. Besonders gute Klebeeigenschaften werden dann erreicht, wenn das styrolbasierte thermoplastische Elastomer sowohl ein Triblock-Copolymer als auch ein Diblock-Copolymer umfasst.

Nach einer bevorzugten Ausführungsform ist vorgesehen, dass das styrolbasierte thermoplastische Elastomer wenigstens eine Verbindung aus der Gruppe bestehend aus Styrol-Butadien-Styrol-Block-Copolymer (SBS), Styrol-Isopren-Styrol-Block-Copolymer (SIS), Styrol-Ethylen-Butylen-Styrol-Block-Copolymer (SEBS) und Styrol-Ethylen-Propylen-Styrol-Block-Copolymer (SEPS) umfasst. Hierdurch werden besonders gute Klebeeigenschaften erreicht. Besonders bevorzugt sind dabei SBS, SIS sowie Mischungen hiervon.

Eine weitere vorteilhafte Verbesserung sieht vor, dass das styrolbasierte thermoplastische Elastomer einen Styrolgehalt zwischen 15 Gew% und 40 Gew% aufweist.

Die Klebeeigenschaften werden dadurch weiter verbessert, dass der Klebstoff ein Kohlenwasserstoffharz umfasst.

Gute Klebeeigenschaften werden insbesondere dann erreicht, wenn die Klebschicht eine Dichte zwischen 0,9 g/cm³ und 1,0 g/cm³ aufweist.

In vorteilhafter Weise weist die Klebschicht eine Viskosität bei 180 °C zwischen 10.000 mPas und 30.000 mPas auf. Die Viskosität kann nach der Norm ASTM D3236 (Prüfmethode Ring + Kugel) gemessen werden.

Vorzugsweise enthält die Klebschicht weniger als 0,5% Lösungsmittel.

Vorzugsweise beträgt der Gehalt an flüchtigen organischen Verbindungen (VOC-Gehalt) der Klebschicht weniger als 0,1%. Besonders bevorzugt liegt der VOC-Gehalt bei 0%.

Die Klebeeigenschaften werden dadurch weiter verbessert, dass der Klebstoff nicht wasserlöslich ist. Insbesondere kann der Klebstoff unpolar sein.

Vorzugsweise liegt der Erweichungsbereich der Klebschicht zwischen 80°C und 150°C. Der Erweichungsbereich wird mit der Kofler Heizbank ermittelt.

Vorzugsweise umfasst die Klebschicht Öl oder Wachs als Verarbeitungshilfsmittel.

Vorzugsweise umfasst die Klebschicht ein Alterungsschutzmittel.

Eine bevorzugte Ausgestaltung der Erfindung sieht vor, dass der Klebstoff in einer Menge von zwischen 10 g/m² und 1000 g/m² auf die erste Seite der Tragschicht aufgebracht ist. Die erste Seite kann dabei insbesondere die Unterseite der Tragschicht sein. Vorzugsweise ist der Klebstoff in einer Menge zwischen 50 g/m² und 300 g/m² auf die erste Seite aufgebracht. Besonders bevorzugt liegt die Klebstoffmenge zwischen 125 g/m² und 175 g/m².

Gute Klebeeigenschaften werden zudem dann erreicht, wenn die Klebschicht eine Schichtdicke zwischen 0,01 mm und 1 mm aufweist. Vorzugsweise liegt die Schichtdicke zwischen 0,05 mm und 0,2 mm.

Erfindungsgemäß ist weiterhin bevorzugt, dass die Klebschicht mehr als 50 % der Fläche der ersten Seite der Tragschicht abdeckt. Vorzugsweise deckt die Klebschicht mehr als 90 % und besonderes bevorzugt mehr als 99% der Fläche der ersten Seite ab. Insbesondere kann die Klebschicht vollflächig auf der Tragschicht vorgesehen sein.

Eine weitere Verbesserung wird dadurch erreicht, dass die Klebschicht mit einer abnehmbaren Abdeckung versehen ist. Vorzugsweise besteht die Abdeckung aus Papier oder Folie. Besonders bevorzugt ist, wenn das Papier oder die Folie beschichtet ist, damit es leicht abgezogen werden kann. Insbesondere kann die Abdeckung eine silikonisierte HDPE-Folie umfassen. Der mit der Abdeckung versehene selbstklebende Bodenbelag kann einfach gelagert, transportiert und zugeschnitten werden. Wenn der Bodenbelag verlegt werden soll, genügt es, die Abdeckung abzuziehen. Jetzt kann die Klebschicht mit dem Untergrund verklebt werden.

Eine besonders bevorzugte Ausgestaltung der Erfindung sieht vor, dass die Polymerzusammensetzung der Tragschicht ein Polymer umfasst, das wenigstens einen Monomerbaustein ausgewählt aus der Gruppe bestehend aus Styrol, Butadien und Isopren umfasst. Dies trägt zu guten Klebeeigenschaften bei. Insbesondere können damit vorteilhaft hohe Schälwiderstände erreicht werden. Vorzugsweise ist vorgesehen, dass das Elastomer und/oder das thermoplastische Elastomer das Polymer mit dem wenigstens einen Monomerbaustein ausgewählt aus der Gruppe bestehend aus Styrol, Butadien und Isopren aufweist.

Eine weitere Verbesserung sieht vor, dass die Polymerzusammensetzung wenigstens eine Substanz ausgewählt aus der Gruppe bestehend aus Naturkautschuk (NR), Polybutadien (BR), Styrol-Butadien-Kautschuk (SBR), Acrylnitril-Butadien-Kautschuk (NBR), Styrol-Butadien-Styrol-Block-Copolymer (SBS) und Styrol-Isopren-Styrol-Block-Copolymer (SIS) aufweist. NR enthält den Monomerbaustein Isopren. BR enthält den Monomerbaustein Butadien. SBR enthält die Monomerbausteine Styrol und Butadien. NBR enthält den Monomerbaustein Butadien. SBS enthält die Monomerbausteine Butadien und Styrol. SIS enthält die Monomerbausteine Styrol und Isopren.

Vorzugsweise liegt der Anteil der wenigstens einen Substanz ausgewählt aus der Gruppe bestehend aus NR (Naturkautschuk), BR (Polybutadien), SBR (Styrol-Butadien-Kautschuk), NBR (Acrylnitril-Butadien-Kautschuk), SBS (Styrol-Butadien-Styrol-Block-Copolymer) und SIS (Styrol-Isopren-Styrol-Block-Copolymer) bezogen auf die Gesamtmenge an Polymeren in der Tragschicht bei mehr als 20 Gew%. Vorzugsweise liegt der Anteil bei mehr als 50 Gew%.

Weiterhin trägt zu vorteilhaften Klebeeigenschaften bei, wenn die Tragschicht eine Matrix aufweist, die die Polymerzusammensetzung enthält. Vorzugsweise ist dabei das Polymer, das wenigstens einen Monomerbaustein ausgewählt aus der Gruppe bestehend aus Styrol, Butadien und Isopren umfasst, Bestandteil der Matrix. Zudem ist bevorzugt, dass die Polymerzusammensetzung ein Bindemittel der Matrix bildet.

Zu einer weiteren Verbesserung der Klebestoffeigenschaften trägt bei, wenn die Matrix einen Füllstoff enthält. Vorzugsweise umfasst der Füllstoff wenigstens einen Stoff ausgewählt aus der Gruppe bestehend aus Kreide, Kieselsäure, Kieselerde, Aluminiumhydroxid, Kaolin, Natrium-Aluminiumsilikat, Glasmehl und Holzmehl. Erfindungsgemäß besonders bevorzugt ist, wenn der Füllstoff Kieselerde und/oder Kreide umfasst. Vorzugsweise ist der Füllstoff in der Matrix mit einem Gewichtsanteil zwischen 50 und 500 bezogen auf 100 Teile Polymere in der Matrix enthalten. Besonders bevorzugt ist, wenn der vorgenannte Gewichtsanteil zwischen 150 und 300 liegt.

Erfindungsgemäß kann vorgesehen sein, dass der Bodenbelag wenigstens eine weitere Schicht aufweist. Zudem kann der Bodenbelag auch mehrere Tragschichten umfassen. Die wenigstens eine weitere Schicht kann eine Folie umfassen, die auf der Tragschicht angeordnet ist. Erfindungsgemäß können die Tragschicht und/oder die weitere Schicht als Dekorschicht ausgebildet sein.

Eine besonders vorteilhafte Ausgestaltung sieht vor, dass in die Matrix dekorative Elemente eingebettet sind. Vorzugsweise sind die dekorativen Elemente von einer zweiten Seite, die der ersten Seite gegenüberliegt, sichtbar. Die dekorativen Elemente können insbesondere Partikel sein, die eine andere Farbe als die Matrix aufweisen.

In besonders bevorzugter Weise ist der Bodenbelag ein ElastomerBodenbelag oder ein TPE-Bodenbelag.

In vorteilhafter Weise wird der Klebstoff vor dem Aufbringen auf die Tragschicht unter Zufuhr von Energie erweicht.

Weiterhin ist von Vorteil, wenn der erweichte Klebstoff mittels einer Walze oder einer Rakel auf die Tragschicht aufgebracht wird. Das Aufbringen mit einer Walze ist besonders bevorzugt.

Vorzugsweise wird auf die Klebschicht eine abnehmbare Abdeckung aufgebracht.

Besonders gute Klebeeigenschaften werden dann erreicht, wenn die erste Seite der Tragschicht vor dem Aufbringen des Haftklebstoffes geschliffen wird.

Aufgrund der guten Klebeeigenschaften kann aber auch vorgesehen sein, dass die erste Seite der Tragschicht vor dem Aufbringen des Haftklebstoffes nicht geschliffen wird. Hierdurch werden Herstellungskosten gesenkt und der Ressourcenverbrauch reduziert.

Erfindungsgemäß ist besonders bevorzugt, wenn der Klebstoff vor dem Aufbringen auf eine Verarbeitungstemperatur 160°C und 200°C erwärmt wird. Vorzugsweise wird der Klebstoff auf eine Verarbeitungstemperatur zwischen 170 °C und 190 °C erwärmt. Dies trägt zu vorteilhaften Klebeeigenschaften bei.

Weitere Ziele, Merkmale, Vorteile und Anwendungsmöglichkeiten der vorliegenden Erfindung ergeben sich aus der nachfolgenden Beschreibung von Ausführungsbeispielen sowie der Zeichnung. Dabei bilden alle beschriebenen und/oder bildlich dargestellten Merkmale für sich oder in beliebiger sinnvoller Kombination den Gegenstand der Erfindung, auch unabhängig von der Zusammenfassung in einzelnen Ansprüchen oder deren Rückbeziehungen.

Es zeigen:
- Fig. 1:: eine schematische Darstellung eines erfindungsgemäßen selbstklebenden Bodenbelags;
- Fig. 2:: eine Vorrichtung zur Beschichtung des Bodenbelags mit der Klebschicht.

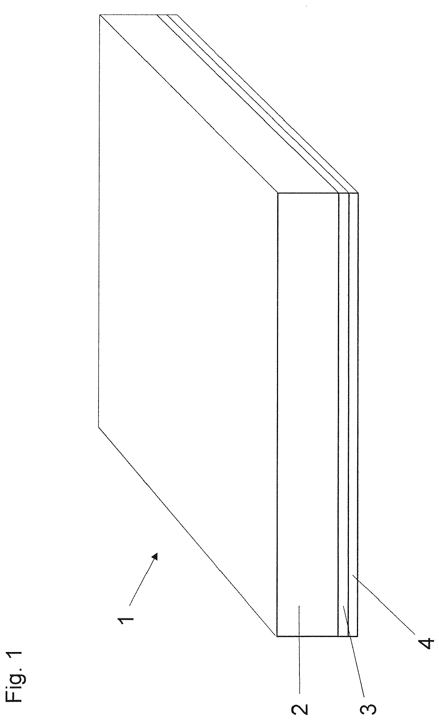

Figur 1 zeigt schematisch einen erfindungsgemäßen Bodenbelag 1. Der Bodenbelag weist eine Tragschicht 2 auf. An einer ersten Seite, die in Figur 1 nach unten weist, ist eine Klebschicht 3 angeordnet, die einen Klebstoff zum Verbinden des Bodenbelages mit einem Untergrund aufweist. Die Klebschicht 3 ist mit einer Abdeckung 4 versehen. Diese schützt die Klebschicht 3 bis zu dem Zeitpunkt, zu dem die Verlegung erfolgen soll. Vor der Verlegung wird die Abdeckung 4 abgezogen, damit der Bodenbelag 1 mit der Klebschicht 3 mit dem Untergrund in Kontakt gebracht werden kann.

Die Tragschicht 2 weist eine Matrix auf, die eine Polymerzusammensetzung enthält. Die Polymerzusammensetzung umfasst ein Elastomer, das durch Vernetzen von Kautschuk hergestellt wird. Nach einer anderen Ausführung kann die Tragschicht ein thermoplastisches Elastomer aufweisen.

Die Klebschicht 3 enthält einen Klebstoff, der ein drucksensitiver Haftklebstoff ist. Damit kann der Bodenbelag 1 nach Abnehmen der Abdeckung 4 bei üblichen Raumtemperaturen sofort mit einem Untergrund, wie z.B. einem Estrich dauerhaft verklebt werden. Es genügt, den Bodenbelag 1 mit der Klebschicht 3 auf den Untergrund aufzulegen und den Bodenbelag 1 gegen den Untergrund zu drücken, um die Klebeverbindung herzustellen. Nach Aufbringen des Bodenbelages 1 muss keine Wartezeit eingehalten werden.

Der Klebstoff in der Klebschicht umfasst ein styrolbasiertes thermoplastisches Elastomer. Ein entsprechender Klebstoff ist unter der Bezeichnung Technomelt PS 8795-22 von der Firma Henkel AG & Co. KGaA erhältlich.

Die Abdeckung 4 ist eine einseitig silikonisierte HDPE-Folie.

Die in Figur 1 dargestellten Größenverhältnisse sind nicht maßstabsgerecht. Üblicherweise liegt die Dicke der Tragschicht 2 zwischen 1 mm und 10 mm. Die Dicke der Klebschicht 3 liegt zwischen 0,01 mm und 1 mm und vorzugsweise zwischen 0,5 mm und 0,2 mm.

Zur Überprüfung der Klebereigenschaften wurde für die Tragschicht der Bodenbelag noraplan 913 signa von der Firma nora systems GmbH verwendet. Dies ist ein Elastomerbodenbelag aus NR und SBR. Das Produkt wurde mit dem Klebstoff Technomelt PS 8795-22 von der Firma Henkel AG & Co. KGaA einseitig beschichtet. Der Klebstoff wurde in einer Menge von 130 g/m² aufgebracht. Als Abdeckung wurde eine einseitig silikonisierte HDPE-Folie verwendet.

Nach Abziehen der Abdeckung 4 wurde der Bodenbelag 1 mit der Klebschicht 3 auf ein Aluminiumblech aufgeklebt. Anschließend wurde die Schälfestigkeit nach DIN 13 72:2015 ermittelt. Dabei hat sich eine Schälfestigkeit von 0,7 N/mm ergeben. Damit ist eine gute Schälfestigkeit erreicht.

Darüber hinaus wurde eine Maßänderung nach Wärmeeinwirkung (50°C) bestimmt. Die Maßänderung betrug lediglich 0,17 %. Diese geringe Maßänderung nach Wärmeinwirkung belegt die hohe Qualität der Verklebung des Bodenbelages 1 mit dem Untergrund.

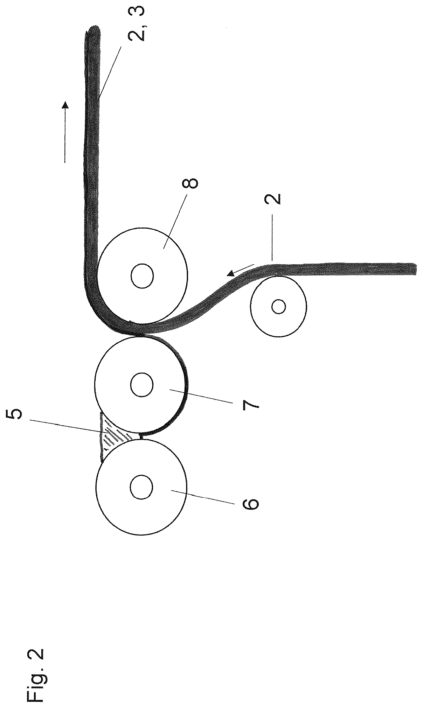

Figur 2 erläutert das Verfahren zur Herstellung des selbstklebenden Bodenbelages. Es ist gut zu erkennen, dass eine bahnenförmige Tragschicht 2 bereitgestellt wird. Weiterhin wird ein Klebstoff 5, der ein styrolbasiertes thermoplastisches Elastomer umfasst, bereitgestellt. Der Klebstoff 5 wird dabei auf eine Verarbeitungstemperatur zwischen 170° und 190° erwärmt. Der Klebstoff 5 ist ein Haft-Hotmelt-Klebstoff. Der Klebstoff 5 wird dabei in den Spalt zwischen einer Auftragswalze 7 und einer weiteren Walze 6 gegeben. Die Auftragswalze 7 befindet sich in Rotation und nimmt dabei an ihrer Oberfläche eine dünne Schicht des Klebstoffes 5 mit und überträgt diese auf die Tragschicht 2. Die Tragschicht 2 wird mit der Gegendruckwalze 8 gegen die Auftragswalze 7 gedrückt. Die auf diese Weise mit der Klebschicht 3 versehenen Tragschicht 2 kann in nicht dargestellter Weise mit einer Abdeckung 4 abgedeckt werden. Daran anschließend wird der Bodenbelag 1 auf die gewünschte Länge abgelängt und als bahnenförmiger Bodenbelag oder als Bodenbelagsfliesen vertrieben.

## Patentansprüche

1. Selbstklebender Bodenbelag umfassend eine Tragschicht (2), enthaltend eine Polymerzusammensetzung, die ein Elastomer und/oder ein thermoplastisches Elastomer umfasst, und eine Klebschicht (3) umfassend einen Klebstoff zum Verbinden des Bodenbelags (1) mit einem Untergrund, wobei der Klebstoff (5) ein styrolbasiertes thermoplastisches Elastomer umfasst, **dadurch gekennzeichnet, dass** der Bodenbelag (1) an einer ersten Seite der Tragschicht diese Klebschicht (3) aufweist.

2. Selbstklebender Bodenbelag nach Anspruch 1, **dadurch gekennzeichnet, dass** der Klebstoff (5) ein Haftklebstoff ist.

3. Selbstklebender Bodenbelag nach Anspruch 1 oder 2, **dadurch gekennzeichnet, dass** der Klebstoff (5) ein Schmelzklebstoff ist.

4. Selbstklebender Bodenbelag nach einem der Ansprüche 1 bis 3,
**dadurch gekennzeichnet, dass** das styrolbasierte thermoplastische Elastomer ein Styrol-Blockcopolymer umfasst.

5. Selbstklebender Bodenbelag nach einem der Ansprüche 1 bis 4,
**dadurch gekennzeichnet, dass** das styrolbasierte thermoplastische Elastomer ein Triblock-Copolymer mit der Struktur S-X-S umfasst, wobei S ein Styrolblock ist und X ein Block mit bei 20°C elastomeren Eigenschaften.

6. Selbstklebender Bodenbelag nach Anspruch 5, **dadurch gekennzeichnet,**
**dass** das styrolbasierte thermoplastische Elastomer ein Diblock-Copolymer umfasst.

7. Selbstklebender Bodenbelag nach einem der Ansprüche 1 bis 6,
**dadurch gekennzeichnet, dass** das styrolbasierte thermoplastische Elastomer wenigstens eine Verbindung aus der Gruppe bestehend aus Styrol-Butadien-Styrol-Block-Copolymer (SBS), Styrol-Isopren-Styrol-Block-Copolymer (SIS), Styrol-Ethylen-Butylen-Styrol-Block-Copolymer (SEBS) und Styrol-Ethylen-Propylen-Styrol-Block-Copolymer (SEPS) umfasst.

8. Selbstklebender Bodenbelag nach einem der Ansprüche 1 bis 7,
**dadurch gekennzeichnet, dass** der Klebstoff in einer Menge von zwischen 10 g/m² und 1000 g/m² auf die erste Seite der Tragschicht (2) aufgebracht ist.

9. Selbstklebender Bodenbelag nach einem der Ansprüche 1 bis 8,
**dadurch gekennzeichnet, dass** die Polymerzusammensetzung ein Polymer umfasst, das wenigstens einen Monomerbaustein ausgewählt aus der Gruppe bestehend aus Styrol, Butadien und Isopren umfasst.

10. Selbstklebender Bodenbelag nach einem der Ansprüche 1 bis 9,
**dadurch gekennzeichnet, dass** die Polymerzusammensetzung wenigstens eine Substanz ausgewählt aus der Gruppe bestehend aus Naturkautschuk (NR), Polybutadien (BR), Styrol-Butadien-Kautschuk (SBR), Acrylnitril-Butadien-Kautschuk (NBR), Styrol-Butadien-Styrol-Block-Copolymer (SBS) und Styrol-Isopren-Styrol-Block-Copolymer (SIS) aufweist.

11. Selbstklebender Bodenbelag nach einem der Ansprüche 1 bis 10,
**dadurch gekennzeichnet, dass** die Tragschicht (2) eine Matrix aufweist, die die Polymerzusammensetzung enthält.

12. Verfahren zur Herstellung eines selbstklebenden Bodenbelags nach einem der Ansprüche 1 bis 11, umfassend die Schritte:
- Bereitstellen einer Tragschicht (2), welche ein Elastomer und/oder ein thermoplastisches Elastomer umfasst;
- Bereitstellen eines Klebstoffes (5), der ein styrolbasiertes thermoplastisches Elastomer umfasst;
- Aufbringen des Klebstoffes auf eine erste Seite der Tragschicht (2) zur Erstellung eines Bodenbelages (1) mit einer Klebschicht (3) zum Verbinden mit einem Untergrund.

## Claims

1. Self-adhesive floor covering comprising a base layer (2), containing a polymer composition, which comprises an elastomer and/or a thermoplastic elastomer, and an adhesive layer (3) comprising an adhesive for connecting the floor covering (1) to a substrate, wherein the adhesive (5) comprises a styrene-based thermoplastic elastomer, **characterised in that** the floor covering (1) has this adhesive layer (3) on a first side of the base layer (2).

2. Self-adhesive floor covering according to claim 1, **characterised in that** the adhesive (5) is a contact adhesive.

3. Self-adhesive floor covering according to claim 1 or 2, **characterised in that** the adhesive (5) is a hot-melt adhesive.

4. Self-adhesive floor covering according to any of claims 1 to 3, **characterised in that** the styrene-based thermoplastic elastomer comprises a styrene block copolymer.

5. Self-adhesive floor covering according to any of claims 1 to 4, **characterised in that** the styrene-based thermoplastic elastomer comprises a triblock copolymer having the structure S-X-S, wherein S is a styrene block and X is a block having elastomeric properties at 20°C.

6. Self-adhesive floor covering according claim 5, **characterised in that** the styrene-based thermoplastic elastomer comprises a diblock copolymer.

7. Self-adhesive floor covering according to any of claims 1 to 6, **characterised in that** the styrene-based thermoplastic elastomer comprises at least one compound from the group consisting of styrene-butadiene-styrene block copolymer (SBS), styrene-isoprene-styrene block copolymer (SIS), styrene-ethylene-butylene-styrene block copolymer (SEBS) and styrene-ethylenepropylene-styrene block coopolymer (SEPS).

8. Self-adhesive floor covering according to any of claims 1 to 7, **characterised in that** the adhesive is applied to the first side of the base layer (2) in a quantity of between 10 g/m² and 1000 g/m².

9. Self-adhesive floor covering according to any of claims 1 to 8, **characterised in that** the polymer composition comprises a polymer which comprises at least one monomer unit selected from the group consisting of styrene, butadiene and isoprene.

10. Self-adhesive floor covering according to any of claims 1 to 9, **characterised in that** the polymer composition comprises at least one substance selected from the group consisting of natural rubber (NR), polybutadiene (BR), styrene-butadiene rubber (SBR), acrylonitrile-butadiene rubber (NBR), styrene-butadiene-styrene block copolymer (SBS) and styrene-isoprene-styrene block copolymer (SIS).

11. Self-adhesive floor covering according to any of claims 1 to 10, **characterised in that** the base layer (2) has a matrix which contains the polymer composition.

12. Method for producing a self-adhesive floor covering, according to any of claims 1 to 11, comprising the steps of:
- providing a base layer (2) which comprises an elastomer and/or a thermoplastic elastomer;
- providing an adhesive (5) which comprises a styrene-based thermoplastic elastomer;
- applying the adhesive to a first side of the base layer (2) for producing a floor covering (1) with an adhesive layer (3) for connecting to a substrate.

## Revendications

1. Revêtement de sol autocollant comprenant une couche de base (2), contenant une composition de polymères, qui comprend un élastomère et/ou un élastomère thermoplastique, et une couche adhésive (3) comprenant un adhésif pour relier le revêtement de sol (1) avec un support, dans lequel l'adhésif (5) comprend un élastomère thermoplastique à base de styrène, **caractérisé en ce que** le revêtement de sol (1) présente cette couche adhésive (3) sur une première face de la couche de base.

2. Revêtement de sol autocollant selon la revendication 1, **caractérisé en ce que** l'adhésif (5) est un adhésif de contact.

3. Revêtement de sol autocollant selon la revendication 1 ou 2, **caractérisé en ce que** l'adhésif (5) est un adhésif thermofusible.

4. Revêtement de sol autocollant selon l'une des revendications 1 à 3, **caractérisé en ce que** l'élastomère thermoplastique à base de styrène comprend un copolymère séquencé de styrène.

5. Revêtement de sol autocollant selon l'une des revendications 1 à 4, **caractérisé en ce que** l'élastomère thermoplastique à base de styrène comprend un copolymère tri séquencé avec la structure S-X-S, dans lequel S est une séquence styrène et X est une séquence avec des propriétés d'élastomère à 20 °C.

6. Revêtement de sol autocollant selon la revendication 5, **caractérisé en ce que** l'élastomère thermoplastique à base de styrène comprend un copolymère bi séquencé.

7. Revêtement de sol autocollant selon l'une des revendications 1 à 6, **caractérisé en ce que** l'élastomère thermoplastique à base de styrène comprend au moins un composé du groupe constitué d'un copolymère séquencé styrène-butadiène-styrène (SBS), d'un copolymère séquencé styrène-isoprène- styrène (SIS), d'un copolymère séquencé styrène-éthylène- butylène-styrène (SEBS), et d'un copolymère séquencé styrène- éthylène-propylène-styrène (SEPS).

8. Revêtement de sol autocollant selon l'une des revendications 1 à 7, **caractérisé en ce que** l'adhésif est appliqué sur une première face de la couche de base (2) en une quantité entre 10 g/m² et 1000 g/m².

9. Revêtement de sol autocollant selon l'une des revendications 1 à 8, **caractérisé en ce que** la composition de polymères comprend un polymère qui comprend au moins une unité monomère choisie dans le groupe constitué de styrène, butadiène et d'isoprène.

10. Revêtement de sol autocollant selon l'une des revendications 1 à 9, **caractérisé en ce que** la composition de polymères présente au moins une substance choisie dans le groupe constitué de caoutchouc naturel (NR), de polybutadiène (BR), de caoutchouc styrène-butadiène (SBR), de caoutchouc acrylonitrile-butadiène (NBR), d'un copolymère séquencé styrène-butadiène-styrène (SBS) et d'un copolymère séquencé styrène-isoprène-styrène (SIS).

11. Revêtement de sol autocollant selon l'une des revendications 1 à 10, **caractérisé en ce que** la couche de base (2) présente une matrice qui contient la composition de polymères.

12. Procédé de fabrication d'un revêtement de sol autocollant selon l'une des revendications 1 à 11, comprenant les étapes :
- Fourniture d'une couche de base (2), qui comprend un élastomère et/ou un élastomère thermoplastique;
- Fourniture d'un adhésif (5), qui comprend un élastomère thermoplastique à base de styrène ;
- application de l'adhésif sur une première face de la couche de base (2) pour la fabrication d'un revêtement de sol (1) pourvu d'une couche adhésive (3) pour le relier avec un support.
